# EUROPEAN PATENT APPLICATION

(11) **EP 4 683 399 A1**
(43) Date of publication of application: **21.01.2026**
(21) Application number: 23926775.0
(22) Date of filing: 15.03.2023
(51) Int. Cl.: H04W 56/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZHANG, Jinyu, Dongguan, Guangdong 523860 (CN); XU, Weijie, Dongguan, Guangdong 523860 (CN); HE, Chuanfeng, Dongguan, Guangdong 523860 (CN)
(74) Representative: RGTH
(86) International application number: PCT/CN2023/081699
(87) International publication number: WO 2024/187419

(57) **Abstract**

The present application provides a wireless communication method, a terminal device, and a network device. The method comprises: a terminal device receives first information, wherein the first information is used for indicating a frequency domain position of a first channel, and the first channel is a synchronization channel or a discovery channel. In embodiments of the present application, a terminal device can acquire information (i.e., first information) used for indicating the frequency of a synchronization channel/a discovery channel. On the basis of the first information, the terminal device can calibrate a frequency offset of the terminal device, thereby improving the communication quality.

## Description

### TECHNICAL FIELD

This application relates to the field of communications technologies, and more specifically, to a wireless communication method, a terminal device, and a network device.

### BACKGROUND

In a communications system, a terminal device is often required to perform signal detection on a synchronization channel/discovery channel, so as to acquire useful information, to prepare for a subsequent communication process. However, if the terminal device undergoes a relatively large frequency drift, it is not conducive to detection of a synchronization signal/discovery signal, consequently affecting communication quality.

### SUMMARY

This application provides a communication method, a terminal device, and a network device, so as to improve communication quality of a communications system.

According to a first aspect, there is provided a wireless communication method. The wireless communication method includes: receiving, by a terminal device, first information, where the first information is used to indicate a frequency domain location of a first channel, where the first channel is a synchronization channel or a discovery channel.

According to a second aspect, there is provided a wireless communication method. The wireless communication method includes: transmitting, by a network device, first information, where the first information is used to indicate a frequency domain location of a first channel, where the first channel is a synchronization channel or a discovery channel.

According to a third aspect, there is provided a terminal device. The terminal device includes: a receiving unit, configured to receive first information, where the first information is used to indicate a frequency domain location of a first channel, where the first channel is a synchronization channel or a discovery channel.

According to a fourth aspect, there is provided a network device. The network device includes: a transmitting unit, configured to transmit first information, where the first information is used to indicate a frequency domain location of a first channel, where the first channel is a synchronization channel or a discovery channel.

According to a fifth aspect, there is provided a terminal device. The terminal device includes a memory and a processor, where the memory is configured to store a program, and the processor is configured to invoke the program in the memory to execute the method according to the first aspect.

According to a sixth aspect, there is provided a network device. The network device includes a memory and a processor, where the memory is configured to store a program, and the processor is configured to invoke the program in the memory, to execute the method according to the second aspect.

According to a seventh aspect, there is provided a terminal device. The terminal device includes a processor, configured to invoke a program from a memory to execute the method according to the first aspect.

According to an eighth aspect, there is provided a network device. The network device includes a processor, configured to invoke a program from a memory, to execute the method according to the second aspect.

According to a ninth aspect, a chip is provided, and includes a processor configured to invoke a program from a memory to cause a device on which the chip is installed to execute a method according to the first aspect or the second aspect.

According to a tenth aspect, a computer-readable storage medium is provided, where the computer-readable storage medium stores a program, and the program causes a computer to execute the method according to the first aspect or the second aspect.

According to an eleventh aspect, a computer program product is provided, and includes a program, where the program causes a computer to execute the method according to the first aspect or the second aspect.

According to a twelfth aspect, a computer program is provided, where the computer program causes a computer to execute the method according to the first aspect or the second aspect.

In embodiments of this application, the terminal device can acquire information used to indicate a frequency of a synchronization channel/discovery channel (namely, the first information mentioned above). Based on the first information, the terminal device may implement frequency offset calibration of the terminal device, thereby facilitating improving communication quality.

### BRIEF DESCRIPTION OF DRAWINGS

FIG. 1 is an example diagram of a zero-power communication system.
FIG. 2 is an example diagram of a backscatter communication principle.
FIG. 3 is a diagram of a circuit principle of resistive load modulation.
Part a of FIG. 4 is an example diagram of synchronization channels at a channel spacing.
Part b of FIG. 4 is an example diagram of synchronization channels at another channel spacing.
FIG. 5 is an example diagram of a terminal device that supports a WUR.
FIG. 6 is a schematic structural diagram of a WUR synchronization frame.
FIG. 7 is a schematic structural diagram of a WUR discovery frame.
FIG. 8 is an example diagram of a frequency error of a terminal device.
FIG. 9 is a flowchart of a wireless communication method according to an embodiment of this application.
FIG. 10 is an example diagram of a frequency offset range of a terminal device according to an embodiment of this application.
FIG. 11 is an example diagram of a signal detection manner based on a relative channel number according to an embodiment of this application.
FIG. 12 is another example diagram of a signal detection manner based on a relative channel number according to an embodiment of this application.
FIG. 13 is still another example diagram of a signal detection manner based on a relative channel number according to an embodiment of this application.
FIG. 14 is yet another example diagram of a signal detection manner based on a relative channel number according to an embodiment of this application.
FIG. 15 is an example diagram of a channel division manner of a 2.4 GHz Wi-Fi system according to an embodiment of this application.
FIG. 16 is a schematic diagram of a terminal device according to an embodiment of this application.
FIG. 17 is a schematic diagram of a network device according to an embodiment of this application.
FIG. 18 is a schematic structural diagram of a communications apparatus according to an embodiment of this application.

### DESCRIPTION OF EMBODIMENTS

Technical solutions in this application are described below with reference to the accompanying drawings. For ease of understanding, related concepts involved in embodiments of this application are first briefly introduced below.

### Zero-power communication technology

With the development of wireless communications technologies, it is expected to integrate a wireless communications system with various vertical industries such as logistics, manufacturing, transportation, and energy. For example, the wireless communications system may be integrated with an industrial wireless sensor network (industrial wireless sensor network, IWSN). For another example, the wireless communications system may be integrated with smart logistics and smart warehousing. For another example, the wireless communications system may be integrated with a smart home network.

However, in these industries, a terminal device is generally required to have features such as a relatively low cost, a relatively small size (such as an ultra-thin size), maintenance-free, and a long life. Therefore, to meet the foregoing condition, in a solution, the terminal device may be an internet of things (internet of things, IoT for short) device based on ambient energy, which may also be referred to as an ambient IoT device or an AMP IoT device. Energy required for operation of this ambient energy-based IoT device is harvested from ambient energy. For example, ambient energy sources may include wireless signals, solar energy, thermal energy, and the like. The ambient energy-based IoT device is similar to a passive or semi-passive electronic tag in zero-power communication, which is described below.

In another solution, a network device and a terminal device (referred to as a "terminal") may communicate with each other by using a zero-power communication technology. In this case, the terminal device may alternatively be referred to as a "zero-power communication terminal device".

In recent years, zero-power devices have been increasingly widely applied. A typical zero-power device is a radio frequency identification (radio frequency identification, RFID) tag. It is a technology that implements contactless automatic transmission and identification of tag information through spatial coupling of radio frequency signals. The RFID tag is also referred to as a "radio frequency tag" or an "electronic tag".

Electronic tags may be classified into active electronic tags, passive electronic tags, and semi-passive electronic tags according to different power supply modes.

The active electronic tag, also referred to as a proactive electronic tag, means that energy for operation of the electronic tag is provided by a battery. The battery, a memory, and an antenna jointly form the active electronic tag, which continuously transmits information in a specified frequency band before the battery is replaced. Generally, an active electronic tag may generate a specific signal after storing a specific amount of energy. This manner is referred to as active transmission. In consideration of power saving of the device, the active electronic tag may perform communication in a manner of backscattering a carrier signal. This manner is referred to as passive transmission.

The passive electronic tag, also referred to as a passivity electronic tag, does not support a built-in battery. When the passive electronic tag is close to a reader/writer, an electronic tag antenna located in a near field range formed through antenna radiation of the reader/writer generates an induced current through electromagnetic induction, and the induced current may drive a chip circuit of the electronic tag. The chip circuit may transmit identifier information stored in the tag to the reader/writer by using the electronic tag antenna.

The semi-passive electronic tag, also referred to as a semi-active electronic tag, inherits advantages of a passive electronic tag, such as a small size, a light weight, a low price, and a long service life. A battery of the semi-passive electronic tag powers only a few circuits in the chip when no reader/writer accesses the semi-passive electronic tag. When a reader/writer accesses the semi-passive electronic tag, the battery may power an RFID chip, to increase a reading/writing distance of the tag and improve communication reliability.

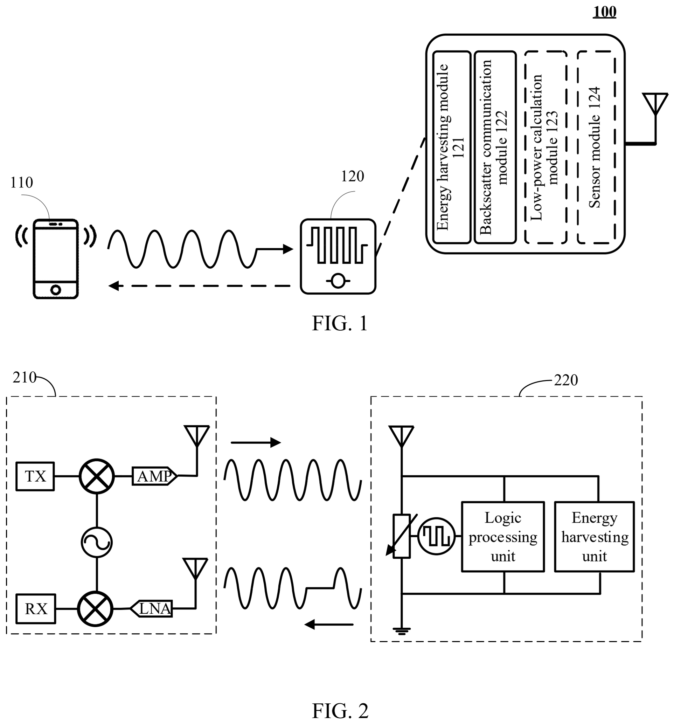

FIG. 1 is an example diagram of a zero-power communication system. The zero-power communication system 100 may be composed of two parts: a reader/writer (reader/writer) 110 and a passive electronic tag (TAG) 120.

The reader/writer 110 may not only read information on the electronic tag, but also write information into the electronic tag. In addition, the reader/writer 110 may further provide the electronic tag with energy required for communication.

The electronic tag 120 may include a coupling component and a chip. In some implementations, each electronic tag may have a unique electronic code, and the electronic tag may be placed on a target to be detected to mark a target object. After entering an electromagnetic field, the electronic tag may receive a radio frequency signal transmitted by the reader/writer. The passive electronic tag or passivity electronic tag may transmit, by using energy obtained from an electromagnetic field generated in space, information stored in the electronic tag.

The electronic tag 120 may generally include an energy harvesting module 121 and a backscatter communication module 122. In some implementations, the electronic tag 120 may further include a low-power calculation module 123 and a sensor module 124.

The energy harvesting module 121 may be configured to harvest energy. For example, the energy harvesting module may harvest energy from a wireless energy supply signal transmitted by a reader/writer. The wireless energy supply signal may be a "radio frequency signal" transmitted by the network device. Therefore, the foregoing energy harvesting module is also referred to as a "radio frequency energy harvesting module". The backscatter communication module 122 may be configured to perform backscatter communication (back scattering) with the network device by the terminal device. The low-power calculation module 123 may be configured to provide a calculation function, such as data processing, for the terminal device. The sensor module 124 may be configured to collect external information (for example, an ambient temperature and ambient humidity).

Backscatter communication is a key technology in a zero-power communication system. A backscatter communication principle according to an embodiment of this application is described below with reference to FIG. 2.

Referring to FIG. 2, a backscatter tag 220 receives a wireless signal (also referred to as a carrier signal) transmitted by a backscatter reader/writer 210, and harvests energy by using a radio frequency energy harvesting module. Further, an incoming wave signal may be modulated by using a logic processing module (which may also be referred to as a low-power processing module), so as to load data that is required to be transmitted. Finally, a modulated signal may be radiated from an antenna. This information transmission process is referred to as backscatter communication.

In some implementations, another component, such as an amplifier (amplifier, AMP), may be further disposed on a transport (transport, TX) path of the backscatter reader/writer 210, and is configured to process a to-be-transmitted signal. Another component, such as a low noise amplifier (low noise amplifier, LNA), may be further disposed on a receive (receive, RX) path of the backscatter reader/writer 210, and is configured to process a received signal.

According to the foregoing backscatter communication principle, a terminal device in backscatter communication generally has the following advantages.
1. The terminal device is not required to actively transmit a signal, and implement backscatter communication by modulating an incoming wave signal.
2. The terminal device does not rely on a conventional active power amplifier transmitter, and uses a low-power calculation unit, which may greatly reduce hardware complexity.
3. Since the terminal device may communicate with a reader/writer by using the backscatter technology, the terminal device may implement battery-free communication through energy harvesting.

The following briefly describes a feature of a backscatter signal during a process in which a zero-power terminal device performs backscatter communication.

The backscatter signal may have the same frequency point as an incoming wave signal, or may have a frequency offset with a incoming wave signal. In the case of frequency offset, offset values of a plurality of zero-power terminal devices may be identical or different.

The backscatter signal may be triggered immediately after the incoming wave signal is received, or may be triggered after a specific time offset. In the case of time offset, time offset values of reflected signals from a plurality of devices may be identical or different.

A spatial feature of a backscatter signal may be set according to a requirement. For example, an antenna array may be used to achieve higher antenna gain in a direction, while achieving lower gain in another direction, such that power of the signal is concentrated in a specific spatial direction.

When performing backscatter communication, a zero-power device may further perform information modulation (also referred to as load modulation), where the load modulation is a common method for an electronic tag to transmit data to a reader/writer. During load modulation, an electrical parameter of an oscillation loop of the electronic tag may be adjusted according to timing of a data stream, such that magnitude and phase of impedance of the electronic tag may change accordingly, thereby completing a modulation process.

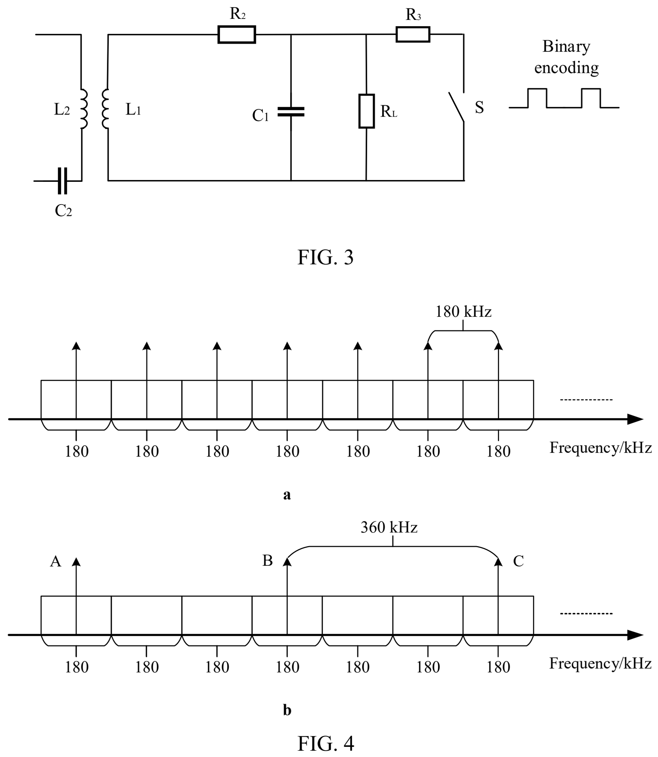

A load modulation technology mainly includes two manners: resistive load modulation and capacitive load modulation. FIG. 3 is a diagram of a circuit principle of resistive load modulation. Referring to FIG. 3, in the resistive load modulation, a resistor, referred to as a load modulation resistor (R₃ in FIG. 3), may be connected in parallel to a load (R_{L}). The resistor is switched on or off in accordance with clock of a data stream, so that modulation of a backscatter signal may be implemented. On/off of a switch S may be controlled through binary data encoding.

In the capacitive load modulation, a capacitor may be connected in parallel to a load, to replace a load modulation resistor controlled through binary data encoding in FIG. 3.

It should be noted that an implementation of a circuit described in FIG. 3 that implements a load modulation technology is similar to an existing implementation of a circuit that implements a load modulation technology. For brevity, details of functions of a resistor R₂, capacitors C₁ and C₂, and inductors L₁ and L₂ included in FIG. 3 are not described.

It should be noted that, the zero-power communication technology is described above by using a reader/writer and an electronic tag as an example, and the zero-power communication technology may be further applied to communication between another type of terminal device and a network device.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a wireless communication device, a user agent, or a user apparatus. The terminal device in embodiments of this application may be a device that provides voice and/or data connectivity for a user, and may be configured to connect a person, an object, and a machine, for example, a household appliance with a wireless connection function, a sensor, and an electronic tag. The terminal in embodiments of this application may be a wireless terminal in a smart home (smart home), a wireless terminal in an IWSN, a wireless terminal in smart logistics and smart warehousing, a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or the like.

The network device in embodiments of this application may be a device configured to communicate with the terminal device. If the terminal device is an electronic tag, the network device may be a reader/writer (for example, a reader/writer based on a radio frequency identification technology) that is configured to perform reading and writing operations on the electronic tag. The network device may alternatively be an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access piont, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

### Cell search

In a conventional cellular network, a network device provides a service for a terminal device by deploying a cell. In some cases, for example, when the terminal device is powered on, the terminal device is required to perform a cell search to find available cells, so as to select a cell (for example, a cell with strongest signal energy) from the available cells for camping on. When required to transmit a service, the terminal device may initiate a random access procedure to establish a connection with a network. It may be learned that the cell search may be a first step for the terminal device to acquire a cellular network service. Through the cell search, the terminal device can search for and find a suitable cell and then access the cell. Generally, a cell search process may involve the following three aspects.

First, the terminal device may tune a receiving end to a corresponding frequency point based on frequency points supported by the terminal device and a frequency band provided by an operator, to perform a signal search. For example, the terminal device may tune the receiving end to the frequency point that is supported by the terminal device and that is within the frequency band provided by the operator, to perform a signal search.

Second, the terminal device may obtain initial time-frequency synchronization, a cell ID, a master information block (master information block, MIB), and the like by detecting a synchronization signal transmitted by a cell. The MIB includes system information (system information block, SIB) related configurations, whether camping is allowed, whether intra-frequency reselection is allowed, and other information.

Third, the terminal device may receive a broadcast message transmitted by a cell.

In the foregoing process, to support the terminal device in completing a cell search, the network device is required to transmit a synchronization signal and a broadcast signal (in particular, required to carry MIB information). For example, in an NR network, a gNB may transmit an SS/PBCH block (synchronization signal and PBCH block, SSB for short) to a 5G terminal device.

Generally, a synchronization signal may be transmitted at a specific frequency point, and the frequency point of the synchronization signal may be referred to as a synchronization raster (synchronization raster) in the NR network. Assuming that a total bandwidth of an available downlink frequency band is 35 MHz, and a channel bandwidth of a communications system is X = 0.18 MHz = 180 kHz (corresponding to a PRB with a subcarrier spacing of 15 kHz), according to different specific frequency spacings of synchronization channels, there may be a plurality of synchronization channel frequency points within the downlink frequency band.

FIG. 4 (including part a of FIG. 4 and part b of FIG. 4) is an example diagram of synchronization channels at two channel spacings. In FIG. 4, locations of the arrows may represent frequency points of synchronization channels, and a spacing between arrows may be a frequency spacing of the synchronization channels. A frequency point spacing of the synchronization channels in part a of FIG. 4 is 180 kHz, and a frequency point spacing of the synchronization channels in part b of FIG. 4 is 360 kHz.

In a cell search process, the terminal device may perform a search sequentially at the frequency points (the plurality of frequency points shown in FIG. 4) of the synchronization channels, and may determine, through synchronization signal related detection, whether a cell is operating on the frequency point. Part b of FIG. 4 is used as an example. That is, in a cell search process, the terminal device is required to tune a frequency of the receiving end to frequency points of the three synchronization channels A, B, and C in FIG. 4 in sequence, so as to search for a synchronization signal. If a synchronization signal is detected at a synchronization channel frequency point, information about time-frequency synchronization may be acquired based on the synchronization signal, so as to prepare for a subsequent communication process.

### Wake-up receiver (wake-up receiver, WUR)

To meet energy-saving requirements of a terminal device, in some standards, such as R18, it is planned to introduce a WUR to receive a wake-up signal (wake-up signal, WUS), where the wake-up signal may also be referred to as an energy-saving signal. The WUR features ultra-low cost, ultra-low complexity, and ultra-low power consumption, and it mainly receives a wake-up signal through envelope detection. Therefore, a modulation mode, a waveform, and the like of the wake-up signal received by the WUR are different from those of a signal carried on a PDCCH as defined in the existing R16 and R17 standards. The wake-up signal is mainly an envelope signal obtained by performing ASK modulation on a carrier signal. In some implementations, demodulation of the envelope signal may be accomplished by driving a low-power circuit based on energy provided by a wireless radio frequency signal, and the terminal device is not required to supply power. Therefore, the WUR may be passive. In some other implementations, the WUR may alternatively be powered by the terminal device. Regardless of the power supply method, the WUR greatly reduces power consumption compared to a conventional receiver in the terminal device. For example, the WUR may achieve power consumption of less than 1 milliwatt (mw), which is far lower than tens to hundreds of mw power consumption of the conventional receiver.

Currently, the WUR may be combined with the terminal device as an additional module of a receiver of the terminal device. Certainly, the WUR may alternatively be used as a separate module of the terminal device.

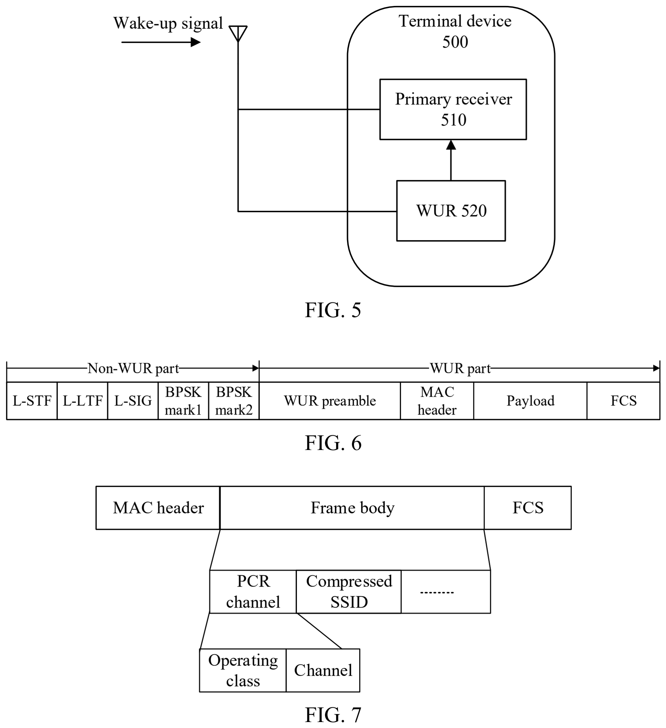

FIG. 5 is an example diagram of a terminal device that supports a WUR. Referring to FIG. 5, a terminal device 500 may include a primary receiver 510 and a WUR 520. In order to save power of the terminal device 500, the terminal device 500 may be configured to be in a sleep state (for example, when the terminal device is in a DRX sleep period), or the primary receiver 510 of the terminal device may be in a sleep state. In this case, the terminal device 500 may receive a wake-up signal by using the WUR 520. In some cases, if the terminal device 500 is required to wake up the primary receiver 510, a network device may transmit a wake-up signal, and accordingly, the terminal device may listen to the WUS by using the WUR 520. When the WUR 520 detects the WUS, the primary receiver 510 may be waken up. Otherwise, the primary receiver 510 of the terminal device may be in the sleep state.

Generally, the WUR is required to be synchronized with the network device to implement communication. In an implementation, the WUR may be synchronized with the network device based on a WUR synchronization frame. FIG. 6 is a schematic structural diagram of a WUR synchronization frame.

Referring to FIG. 6, the WUR synchronization frame may be composed of a non-WUR part and a WUR part. The non-WUR part is transmitted in an OFDM waveform, and the WUR part is transmitted in a WUR OOK waveform. The WUR part may be composed of a WUR preamble (preamble) and WUR data. The WUR data may include a MAC header (header), a payload (payload), and a frame check sequence (frame check sequence, FCS). A type of a synchronization sequence of the WUR preamble is related to a data transmission rate, and different synchronization structures are used for a low data rate LDR and a high data rate HDR.

In an implementation, the network device may transmit a WUR synchronization frame at a specific frequency point (or referred to as a WUR channel). Therefore, the terminal device is required to tune its frequency onto a WUR channel to receive the WUR synchronization frame.

In some embodiments, a wireless communication network may include an access point (access point, AP) and a station (station, STA). When communication quality of a current communication link of a station degrades, a probe response may be obtained by actively polling APs on each channel, so as to switch between basic service sets based on a probe response result. Because this process may take a relatively long time, communication quality of the terminal device may be affected.

To resolve this problem, for an AP (also referred to as a WUR AP) that supports the WUR, a WUR channel may include a WUR discovery (discovery) channel, and the WUR AP may transmit a WUR discovery frame (discovery frame) on the discovery channel, so as to indicate a location of a primary channel, thereby avoiding energy waste caused by searching a plurality of candidate channels by a user.

FIG. 7 is a schematic structural diagram of a WUR discovery frame. Referring to FIG. 7, the WUR discovery frame includes a MAC header, a frame body, and an FCS. The frame body may include a PCR channel field and a compressed service set identifier (service set identifier, SSID), and the PCR channel field may indicate a primary channel of an AP. For example, the PCR channel field may include an operating class field and a channel field, and the operating class field and the channel field may uniquely identify a primary channel.

The WUR channel may include one or more WUR discovery channels. In actual use, the terminal device is required to tune its frequency to a frequency point of the WUR discovery channel for performing a search, so as to receive a WUR discovery frame.

It may be learned based on the foregoing content that, in a communications system, the terminal device is often required to perform signal detection on a synchronization channel/discovery channel, so as to acquire useful information, to prepare for a subsequent communication process. For example, in a cell search process, the terminal device is required to perform a search on a synchronization channel and detect a synchronization signal, so as to perform time-frequency synchronization. For another example, in a Wi-Fi system, the terminal device is required to perform a search on a discovery channel, and detect a discovery signal, so as to acquire information about a primary channel. For another example, in a Wi-Fi system, the terminal device is required to search for a synchronization signal and detect a synchronization frame, so as to perform time-frequency synchronization.

In the foregoing signal detection process, the terminal device is required to tune its frequency to a specific frequency point (a frequency point corresponding to a synchronization channel or a discovery channel). However, if the terminal device (for example, the zero-power device mentioned above) undergoes a relatively large frequency drift, it is not conducive to detection of a synchronization signal/discovery signal, consequently affecting communication quality.

For ease of understanding, the following describes in detail, by using an example in which a zero-power terminal device searches for a cellular network synchronization signal, a problem that may be caused by a frequency drift of the terminal device.

Based on characteristics of the zero-power terminal device, such as being battery-free, maintenance-free, and low-cost, the zero-power terminal device is highly suitable for large-scale deployment and scenarios with special requirements, such as goods in logistics, animals on livestock farms, or critical components in high-temperature and high-pressure environments. However, due to limited costs, such a zero-power terminal device generally has no crystal oscillator or has an oscillator with very low precision, making its frequency prone to drift.

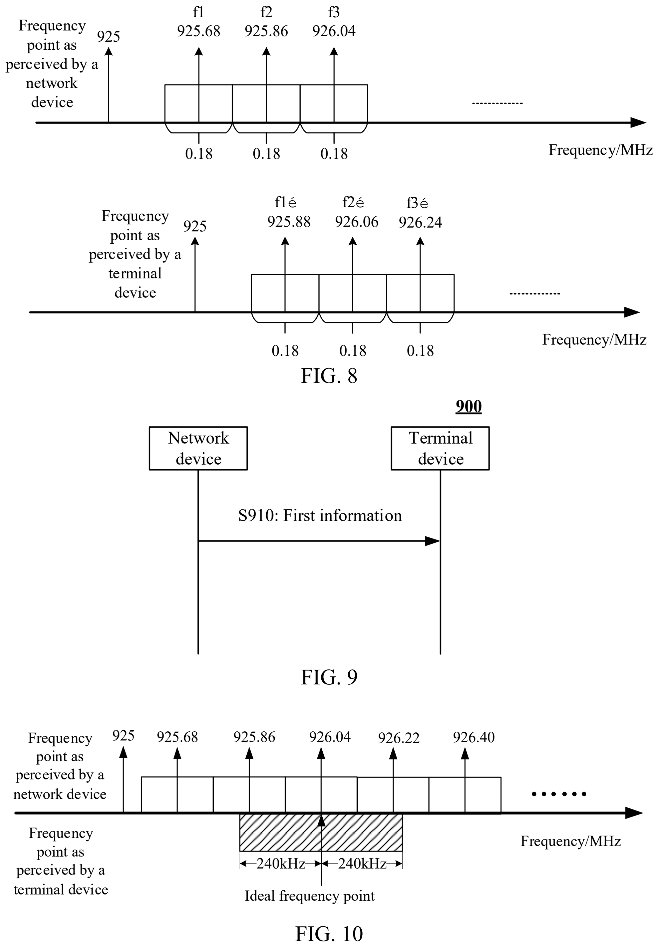

FIG. 8 is an example diagram of a frequency error of a terminal device. For example, when the zero-power terminal device is required to search for a synchronization signal on a synchronization channel at (925+0.5+[0.18,0.36,0.54]) MHz, that is, at the three frequency points of [f1 = 925.68, f2 = 925.86, f3 = 926.04] MHz, a receiving frequency point (for example, a center frequency point of a receiving end) of the zero-power terminal device may be adjusted to a frequency point corresponding to the synchronization channel. However, due to drift of the frequency of the zero-power terminal device (for example, increased by 0.2 MHz compared to an ideal frequency), a receiving frequency point to which the zero-power terminal device is actually tuned is [f1'=925.88, f2'=926.06, f3'=926.24] MHz. That is, the terminal device expects its receiving frequency point to be Y MHz, but a frequency point to which the terminal device is actually tuned is (Y+0.2) MHz.

As a result, the zero-power terminal device may consider a synchronization signal detected at f1'=925.88 MHz as being from a frequency point f1 = 925.68MHz. However, actually, the zero-power terminal device receives a synchronization signal transmitted by the network device at the frequency f2 = 925.86 MHz, which is therefore not conducive to frequency synchronization of the terminal device, thus affecting communication performance.

To avoid the foregoing problem, this application provides a wireless communication method, to indicate information about a frequency of a synchronization channel/discovery channel to the terminal device. Based on the information, the terminal device may implement frequency offset calibration of the terminal device, thereby facilitating improving communication quality.

With reference to FIG. 9, the following describes a wireless communication method according to an embodiment of this application. The method shown in FIG. 9 may be applied to a cellular communications system, or may be applied to a Wi-Fi system. The method shown in FIG. 9 is described from a perspective of interaction between a network device and a terminal device. The network device and the terminal device may be any types of network devices and terminal devices mentioned above. For example, the network device may be a base station, and the terminal device may be UE. For another example, the network device may be an AP, and the terminal device may be an STA. For another example, the network device may be a reader/writer or UE, and the terminal device may be a zero-power device, an IoT device, or the like.

Referring to FIG. 9, in step S910, the terminal device receives first information. In other words, the network device transmits the first information to the terminal device. After receiving the first information, the terminal device may perform channel discovery and/or time-frequency synchronization based on a frequency domain location indicated by the first information.

The first information may be used to indicate a frequency domain location of a first channel. The first channel may be a synchronization channel or a discovery channel. Assuming that the first channel is a synchronization channel, the synchronization channel may be a synchronization channel in a cellular network, for example, a channel that carries an SSB. Alternatively, the synchronization channel may be a synchronization channel in a Wi-Fi system, for example, a channel that carries the synchronization frame shown in FIG. 6. Assuming that the first channel is a discovery channel, the first channel may be a channel that carries the discovery frame (as shown in FIG. 7). In other words, the first channel is a channel for transmitting a discovery signal.

The first information being used to indicate the frequency domain location of the first channel may be replaced with the first information being used to indicate a frequency of the first channel; or the first information being used to indicate a frequency point of the first channel. It should be understood that, in embodiments of this application, meanings of a frequency, a frequency point, and a frequency domain location are equivalent and may be used interchangeably.

In some implementations, the frequency domain location of the first channel may refer to a center frequency point of the first channel. For example, for a synchronization channel in NR, if the synchronization channel includes 20 PRBs, the frequency domain location of the first channel may refer to a subcarrier 0 (that is, a center frequency point) in a 10^{th} PRB in the 20 PRBs.

In some implementations, the frequency domain location of the first channel may refer to a start frequency location of the first channel. For example, for a synchronization channel in NR, the synchronization channel includes 20 PRBs, and the frequency domain location of the first channel may refer to a subcarrier 0 (that is, a start frequency location) in a 1^{st} PRB in the 20 PRBs.

In some implementations, the frequency domain location of the first channel may refer to an end frequency location of the first channel. For example, for a synchronization channel in NR, if the synchronization channel includes 20 PRBs, the frequency domain location of the first channel may refer to a subcarrier 11 (that is, an end frequency location) in a last PRB in the 20 PRBs.

In addition to the foregoing three frequency domain locations, the frequency domain location of the first channel may alternatively refer to another frequency location, and may be specifically set according to an actual communication requirement. This is not limited in embodiments of this application.

In embodiments of this application, the first information may include or indicate one or more of the following information: a frequency value of the first channel; or a channel number of the first channel.

In an implementation, the first information may include or indicate a frequency value of the first channel, such as an absolute frequency value of the first channel. For example, if a frequency point of the first channel is 925.86 MHz, the first information may include 925.86 MHz, or the first information may indicate 925.86 MHz. In some cases, the first information may alternatively include or indicate a relative frequency value of the first channel.

When a frequency range is relatively large, directly indicating the frequency value of the first channel requires occupying more transmission resources. Therefore, in some implementations, the first information may include or indicate a channel number of the first channel.

In some embodiments, the channel number of the first channel may refer to a relative channel number of the first channel.

One or more factors may be considered in a specific design manner of the relative channel number. For example, the relative channel number may be associated with one or more of the following information: a center carrier frequency of the first channel; a bandwidth supported by a communications system or a terminal device; a frequency band supported by a communications system or a terminal device; a subcarrier spacing supported by a communications system or a terminal device; a channel spacing of synchronization channels or discovery channels; or a frequency offset of the terminal device. For example, a maximum frequency offset range of the terminal device may be determined based on the center carrier frequency of the first channel and the frequency offset (or frequency offset performance) of the terminal device. Then, a channel spacing of the first channel may be determined based on one or more of the bandwidth supported by the terminal device, the frequency band supported by the terminal device, or the subcarrier spacing supported by the terminal device. Next, a channel or frequency grouping manner may be determined based on the channel spacing of the first channel and the maximum frequency offset range of the terminal device, so as to determine the relative channel number of the first channel. The following is described in detail with reference to a specific embodiment, which is not described in detail herein.

In an example, the relative channel number of the first channel may refer to a relative number of the first channel numbered inner a first channel group. If the bandwidth supported by the terminal device or a total bandwidth of a communication standard supported by the terminal device is divided into a plurality of channel groups, intra-group numbering may be performed on channels in each channel group of the plurality of channel groups. The plurality of channel groups may include a first channel group, and the first channel group may include a first channel. In this case, a relative channel number of the first channel may be an intra-group number (that is, a relative number) of the first channel in the first channel group. For example, the bandwidth supported by the terminal device is divided into a plurality of channel groups, and each channel group includes three channels. Therefore, a value of the relative channel number of the first channel may be 0, 1, or 2.

In some implementations, a quantity of channels included in the first channel group may be greater than or equal to a quantity of channels included in a frequency error range of the terminal device, so as to avoid occurrence of a plurality of identical channel numbers within the frequency error range of the terminal device.

For example, a frequency error of the terminal device is ±240 kHz (that is, the frequency error range is 480 kHz), and a spacing of synchronization channels is 180 kHz. In this case, the frequency error range of the terminal device may include three synchronization channels. Then, the quantity of channels included in the first channel group may be greater than or equal to three synchronization channels.

In some embodiments, the relative number of the first channel may refer to a channel number of the first channel in a first frequency band (the first channel belongs to the first frequency band). That is, the first frequency band may be divided into a plurality of channels, and the plurality of channels in the first frequency band are numbered, so as to determine a relative number of the first channel.

The first frequency band may be one or more frequency bands supported by the communications system or the terminal device. In some cases, the communications system or the terminal device supports one frequency band. If the frequency band may be divided into 7000 channels, the relative number of the first channel may be determined by numbering the 7000 channels (for example, 0 to 6999 or 1 to 7000). In some other cases, the communications system or the terminal device may support more than one frequency band. For example, the terminal device supports two frequency bands. If the two frequency bands may be respectively divided into 7000 and 8000 channels, the relative number of the first channel may be determined by performing unified numbering on the 15000 channels. In some other cases, the communications system or the terminal device may support more than one frequency band, and a plurality of frequency bands may be spaced far apart (or far exceeding a user frequency offset range). For example, the terminal device supports two frequency bands. If one frequency band supported by the terminal device is near 900 MHz and the other frequency band is near 2.4 GHz (that is, there is no ambiguity between the two frequency bands), numbering may be independently performed for each frequency band, so as to determine a relative number of the first channel in a corresponding frequency band.

It should be noted that if the relative channel number is used to indicate the frequency domain location of the first channel, the foregoing channel grouping manner and the first frequency band supported by the terminal device may be pre-defined in a protocol, or may be agreed upon by the network device and the terminal device.

In embodiments of this application, based on the relative number of the first channel, the frequency domain location of the first channel may be determined by using fewer transmission resources. For example, if the first channel group includes three channels, the frequency domain location of the first channel may be indicated by using only two bits.

In some embodiments, the channel number of the first channel may refer to an absolute channel number of the first channel. Different from the relative channel number, the absolute channel number may correspond to an absolute frequency of the first channel. That is, each channel number corresponds to an absolute frequency value.

For example, the absolute number of the first channel may be an NR absolute channel number (NR absolute radio frequency channel number, NR-ARFCN) (which may be referred to as ARFCN for short). The number corresponds to a global channel raster, and each number may correspond to an absolute frequency domain location. For another example, the absolute number of the first channel may refer to a global synchronization channel number (global synchronization channel number, GSCN), the number corresponds to a global synchronization raster, and each number may correspond to an absolute frequency domain location. For another example, the absolute number of the first channel may be a number of a channel in a 2.4 GHz Wi-Fi scenario.

In embodiments of this application, based on the absolute number of the first channel, the frequency domain location of the first channel may be accurately and directly determined.

It should be noted that, a manner in which the first information indicates the frequency domain location of the first channel may be agreed upon by the network device and the terminal device in advance or may be indicated in a communication process. For example, a manner of indicating the frequency domain location of the first channel may be pre-defined in a protocol or pre-configured. For another example, a manner of indicating the frequency domain location of the first channel may be determined through negotiation between two communication parties in a communication process.

The foregoing describes a method for indicating the frequency domain location of the first channel by using the first information, and the following describes a manner of carrying the first information.

In actual use, the first information may be carried in one of the following: an SSB, a beacon frame, a wake-up receiver synchronization frame; or a discovery frame. For example, in a cellular network, the first information may be carried in a synchronization signal and broadcast channel block. For another example, in a Wi-Fi scenario, the first information may be carried in a beacon frame, a wake-up receiver synchronization frame, or a discovery frame.

In an implementation, the first information may be carried in the first channel. For example, the first channel is a synchronization channel or a discovery channel. The synchronization channel or the discovery channel may carry frequency domain location information of the synchronization channel or the discovery channel. Assuming that the first channel is a synchronization channel in a cellular network, the first information may be carried in an SSB transmitted on the synchronization channel, for example, may be carried in an MIB.

In another implementation, the first information may be carried on a second channel. That is, the first information may be carried on a channel other than the first channel. For example, the first information indicates a frequency location of the synchronization channel, and the first information may be carried on a discovery channel. For another example, the first information indicates a frequency location of a channel on which a beacon frame is located, and the first information may be carried on a discovery channel.

In some embodiments, the first information may be carried in an information field. That is, the first information may be directly carried in the foregoing type of signal block or frame field. For example, the first information may be carried in a PPDU packet part of a beacon frame, or a data part of a WUR synchronization frame (that is, a WUR data field of the synchronization frame shown in FIG. 6 mentioned above), or a data part of a discovery frame (that is, a frame body field of the discovery frame shown in FIG. 7 mentioned above).

In some other embodiments, the first information may be carried in a sequence of a reference signal. For example, the first information may be carried in a physical broadcast channel demodulation reference signal (physical broadcast channel demodulation reference signal, PBCH-DMRS), a synchronization sequence, or the like. In an example, X frequency domain locations, such as X channel numbers, may be represented by X different sequences, respectively. In actual use, X different sequences may be different pseudo-random sequences determined based on different register initial values, or may be different cyclic shifts of a same sequence.

If the first information is carried in an information field, the terminal device may directly acquire the first information from a carrying field at a carrying location. If the first information is carried in a sequence of a reference signal, the terminal device may acquire the carried first information by blind detection of a reference signal sequence.

As mentioned above, the first information may indicate or include the relative channel number of the first channel in the channel group to which the first channel belongs. With reference to FIG. 10 to FIG. 14, a signal detection manner based on the relative channel number of the first channel in the first channel group is described by using an example in which a center frequency point at which the system works is 1 GHz, a frequency spacing between synchronization channels is 180 kHz, and a frequency drift of the terminal device is 240 ppm.

Herein, ppm means parts per million, and ppm may be used to represent a value of a frequency offset allowable at a specific center frequency. The frequency drift of the terminal device being 240 ppm means that a frequency offset range of the terminal device is [-240 kHz, +240 kHz].

It may be learned from the foregoing content that N=3 synchronization channel frequency points (as shown in FIG. 10) may exist in a frequency offset error range of the terminal device.

FIG. 10 is an example diagram of a frequency offset range of a terminal device according to an embodiment of this application. The part above a frequency coordinate axis shows frequency points or actual frequency points as perceived by the network device. The part below the frequency coordinate axis shows frequency points as perceived by the terminal device. As shown in FIG. 10, 925.68 MHz, 925.86 MHz, 926.04 MHz, 926.22 MHz, and 926.40 MHz are frequency points of synchronization channels provided as an example.

Referring to FIG. 10, when the terminal device expects to be tuned to an ideal frequency point of 926.04 MHz, an actual receiving frequency point may be at any location (as shown by a shaded part in FIG. 10) in a range of [925.8 MHz, 926.28 MHz]. It may be learned that, N=3 synchronization channel frequency points (which are respectively 925.86 MHz, 926.04 MHz, and 926.22 MHz) may occur in a frequency offset error range of the terminal device.

If a frequency of the terminal device drifts toward a left location, it is possible to detect a signal at a synchronization frequency point of 925.86 MHz. If a frequency of the terminal device drifts toward a right location, it is possible to detect a signal at a synchronization frequency point of 926.22 MHz. In this case, there may be an error in a frequency synchronization result of the terminal device, thus affecting communication quality.

Therefore, the frequency domain location of the first channel may be indicated based on the intra-group relative channel number of the first channel (which may be referred to herein as an ideal channel corresponding to an ideal frequency point) mentioned above, so as to resolve a problem that a frequency synchronization offset is caused by a frequency error of the terminal device, thus affecting channel quality.

In addition, if a quantity of synchronization channel frequency points in each group may be M, only ceil (log2 (M)) bits may be required to indicate M synchronization channel frequency points in the group, where ceil denotes a ceiling operation. Compared to indicating the absolute frequency value or absolute channel number of the first channel, indicating a relative number of the first channel in a synchronization channel group may significantly reduce payload required for indication.

To ensure that the frequency domain location of the first channel can be uniquely determined based on the relative channel number of the first channel, a quantity M of synchronization channel frequency points in each channel group should be greater than or equal to a quantity N of synchronization channel frequency points that may occur within the frequency offset error range of the terminal device.

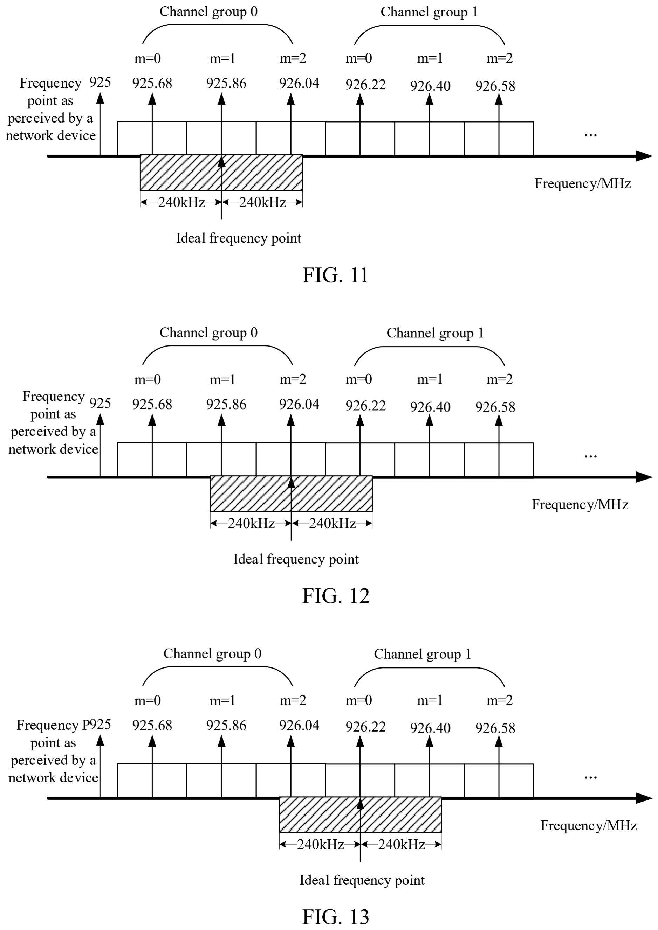

With reference to FIG. 11 to FIG. 14, the following describes in detail a wireless communication method based on the intra-group relative channel number of the first channel. Representation methods in FIG. 11 to FIG. 14 are similar to that in FIG. 9. For simplicity, details are not described herein again.

In FIG. 11 to FIG. 13, M = N = 3, which is used as an example. That is, each channel group may include three synchronization channel frequency points, and an intra-group relative number m of the synchronization channel may range from 0 to 2. As described above, the frequency error range of the terminal device may include three synchronization frequency points. In this case, an actual frequency point detected by the terminal device may be an ideal frequency point, a previous synchronization frequency point of the ideal frequency point, or a next synchronization frequency point of the ideal frequency point. With reference to several different cases, the following describes a method for estimating an actual frequency point of the terminal device based on an intra-group relative number of a channel.

Referring to FIG. 11, if the terminal device expects to perform a search at a frequency point (that is, an ideal frequency point) of 925.86 MHz, and it is known that an intra-group number of the synchronization channel frequency point is m = 1, in an actual search process, the terminal device may estimate an actual frequency point of the terminal device based on an intra-group relative number of a synchronization channel that is indicated by the network device, so as to perform frequency offset estimation, calibration, synchronization, and the like.

If the network device indicates that an intra-group number of the synchronization channel is m = 0 (smaller), it indicates that an actual frequency point of the terminal device is lower than the ideal frequency point, and may be near 925.68 MHz.

If the network device indicates that an intra-group number of the synchronization channel is m = 1 (the same as an intra-group relative number of the ideal frequency point), it indicates that an actual frequency point of the terminal device is near the ideal frequency point.

If the network device indicates that an intra-group number of the synchronization channel is m = 2 (greater), it indicates that an actual frequency point of the terminal device is higher than the ideal frequency point, and may be near 926.04 MHz.

Referring to FIG. 12, for example, the terminal device expects to perform a search at the frequency point of 926.04 MHz, and it is known that an intra-group number of the synchronization channel frequency point is m = 2.

In an actual search process of the terminal device, if the network device indicates that an intra-group number of the synchronization channel is m = 0 (smaller, but cyclically shifted to a next group, namely a channel group 1), it indicates that an actual frequency point of the terminal device is higher than the ideal frequency point, and is near 926.22 MHz.

If the network device indicates that an intra-group number of the synchronization channel is m = 1 (smaller), it indicates that an actual frequency point of the terminal device is lower than the ideal frequency point, and is near 925.86 MHz.

If the network device indicates that an intra-group number of the synchronization channel is m = 2 (the same as an intra-group number corresponding to the ideal frequency point), it indicates that an actual frequency point of the terminal device is near the ideal frequency point of 926.04 MHz.

Referring to FIG. 13, for example, the terminal device expects to perform a search at the frequency point of 926.22 MHz, and it is known that an intra-group number of the synchronization channel frequency point is m = 0.

In an actual search process of the terminal device, if the network device indicates that an intra-group number of the synchronization channel is m = 0 (the same as an intra-group number corresponding to 926.22 MHz), it indicates that an actual frequency point of the terminal device is near the ideal frequency point of 926.04 MHz.

If the network device indicates that an intra-group number of the synchronization channel is m = 1 (greater), it indicates that an actual frequency point of the terminal device is higher than the ideal frequency point, and is near 926.40 MHz.

If the network device indicates that an intra-group number of the synchronization channel is m = 2 (greater, but cyclically shifted to a previous group, namely a channel group 0), it indicates that an actual frequency point of the terminal device is lower than the ideal frequency point, and is near 926.04 MHz.

In some embodiments, a quantity of channels included in a channel group may be greater than a quantity of channels included in a frequency error range of the terminal device, that is, M > N.

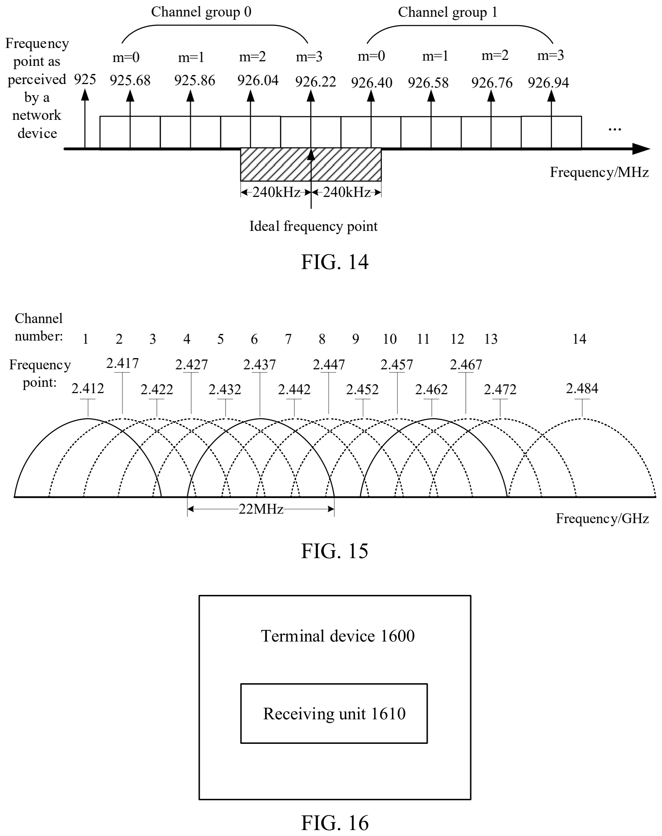

FIG. 14 is yet another example diagram of a signal detection manner based on a relative channel number according to an embodiment of this application. As shown in FIG. 14, each channel group includes four synchronization channel frequency points, and a quantity of channels included in the frequency error range of the terminal device is 3. In a synchronization channel search process, the terminal device may estimate an actual frequency point of the terminal device based on an intra-group number of the ideal frequency point and an intra-group number of a received synchronization frequency point. A method for estimating an actual frequency point of the terminal device is similar to that in the foregoing case in which M = N. For simplicity, details are not described herein again.

As mentioned above, the first information may alternatively indicate or include a relative channel number of the first channel in the first frequency band. The first frequency band may be one or more frequency bands supported by the terminal device. In an implementation, one or more frequency bands supported by the terminal device may be divided into a plurality of channels, and each channel may be numbered. In this case, the first information may be used to indicate the frequency domain location of the first channel based on channel numbers of the plurality of channels.

In the foregoing method, a division manner of one or more frequency bands may be an existing division manner, or may be customized. The following describes the relative channel number of the first channel in the first frequency band by using an existing division manner as an example.

For example, the relative channel number of the first channel in the first frequency band may be determined based on an NR-ARFCN or GSCN. An NR-ARFCN channel is used as an example. In a range below 3GHz, the ARFCN channel is divided according to a raster of 5 kHz. If a bandwidth of a frequency band (band) supported by the terminal device is 35 MHz (below 3GHz), the band supported by the terminal device may be divided into 7000 ARFCN channels. Further, the 7000 channels are numbered, and the frequency domain location of the first channel may be indicated by using a corresponding number of the first channel in the 7000 channels.

In addition, ceil[log2(7000)]=13 bits may be required to indicate relative numbers (to differentiate these 7000 channels) within the band.

The foregoing method may be applicable to a terminal device that supports only one band, or a terminal device that supports a plurality of bands with a relatively large spacing (for example, a terminal device that supports two bands, one near 900 MHz, and the other near 2.4 GHz). That is, if the terminal device supports two bands, but there is a relatively large spacing between the two bands, the foregoing channel division and channel numbering may be independently performed on each of the two bands supported by the terminal device. In this case, although a same relative number of a channel that is received by the terminal device may correspond to two frequency domain locations, since the two frequency domain locations are widely spaced, or a spacing between the two frequency domain locations is far greater than the frequency error range of the terminal device, the terminal device may determine a frequency domain location of the channel based on the number. In some cases, this method may reduce resources required for transmitting the first information.

In another implementation, if the terminal device supports a plurality of frequency bands, unified numbering may be performed on the plurality of frequency bands supported by the terminal device, that is, the relative number of the first channel may correspond to a unique channel in the plurality of frequency bands supported by the terminal device. For example, the terminal device supports a band #a with a bandwidth of 35 MHz near 900 MHz and a band #b with a bandwidth of 40 MHz near 2.4 GHz, and the two bandwidths respectively include 7000 and 8000 ARFCN channels, that is, a quantity of channels included in the frequency bands supported by the terminal device is 15000. In this case, the 15000 channels may be numbered in a unified manner, for example, may be numbered 0 to 14999. In an example, all the channels may be numbered in ascending order of frequencies.

In addition, ceil[log2(15000)]=14 bits may be required to indicate the 15000 channels.

The foregoing is described by using the NR-ARFCN as an example. Because the GSCN channel division granularity is relatively large, if the foregoing method is implemented based on the GSCN channel, resources required for transmitting the first information may be further reduced.

It should be noted that the foregoing method provided in embodiments of this application is also applicable to another scenario such as 2.4 GHz Wi-Fi. A channel division manner and a numbering manner are similar to those in the foregoing description. For brevity, details are not described herein again.

As mentioned above, the first information may indicate or include an absolute channel number of the first channel.

In an implementation, the absolute channel number may be an NR-ARFCN. The number corresponds to the global channel raster mentioned above, and each number may correspond to an absolute frequency domain location. Table 1 shows correspondences between frequencies and ARFCNs.

**Table 1**

| Frequency range/MHz | Global frequency raster granularity/kHz | Start frequency/MHz | Start absolute channel number | Absolute channel number range |
|---|---|---|---|---|
| 0 to 3000 | 5 | 0 | 0 | 0 to 599999 |
| 3000 to 24250 | 15 | 3000 | 600000 | 600000 to 2016666 |
| 24250 to 100000 | 60 | 24250.08 | 2016667 | 2016667 to 3279165 |

Referring to Table 1, it may be learned that, in the frequency band supported by the NR, the three frequency ranges correspond to different division granularities of global channel raster. In the NR, frequencies within 100 GHz are divided into 3279165 raster channels in a manner shown in the foregoing table, and the raster channels are numbered from 0. Each number may correspond to an absolute frequency domain location.

Within each frequency range, a relationship between an absolute channel number and a frequency domain location meets the following formula: Frequency domain location = Start frequency + Global frequency raster granularity × (Absolute channel number - Start absolute channel number).

If the frequency domain location of the first channel is indicated by using the foregoing absolute channel number, ceil[log₂(3,279,165)] = 22 bits of resources may be required to transmit the first information.

In another implementation, the absolute channel number may be GSCN. Table 2 shows correspondences between global synchronization numbers and frequencies.

**Table 2**

| Frequency range/MHz | A frequency domain location of a global frequency raster | Global synchronization number calculation method | Global synchronization number range |
|---|---|---|---|
| 0 to 3000 | N×1200 kHz+M×50 kHz, N = 1:2499,M∈{1,3,5} | 3N+(M-3)/2 | 2 to 7498 |
| 3000 to 24250 | 3000 MHz+N×1.44 MHz, N = 0:14756 | 7499+N | 7499 to 22255 |
| 24250 to 100000 | 24250.08 MHz+N×17.28 MHz, N = 0:4383 | 22256+N | 22256 to 26639 |

Referring to Table 2, in a frequency band of 0 MHz to 3000 MHz, a GSCN of 2 (that is, N = 1, and M = 1) corresponds to a frequency domain location of 1×1200 kHz + 1×50 kHz = 1250 kHz; a GSCN of 3 (that is, N = 1, and M = 3) corresponds to a frequency domain location of 1×1200 kHz + 3×50 kHz = 1350 kHz; and a GSCN of 4 (that is, N = 1, and M = 5) corresponds to a frequency domain location of 1×1200 kHz + 5×50 kHz = 1450 kHz. For a frequency domain location corresponding to another number, reference may be made to the foregoing method for calculation.

If the frequency domain location of the first channel is indicated by using a GSCN, ceil[log2(26639)]=15 bits of resources may be required to transmit the first information.

In a Wi-Fi system, for example, in a 2.4 GHz Wi-Fi system, an operating frequency band of 2.4 GHz to 2.497 GHz may be divided into 14 channels, and absolute channel numbers may be absolute numbers corresponding to the 14 channels.

FIG. 15 is an example diagram of a channel division manner of a 2.4 GHz Wi-Fi system according to an embodiment of this application. As shown in FIG. 15, a channel supported by the system may be divided into 14 channels, and absolute numbers of the channels may be 1 to 14. In addition, FIG. 15 further shows correspondences between channel numbers and channel frequency points.

In this scenario, ceil[log2(14)]=4 bits may be required to indicate the frequency domain location of the first channel by using the 14 absolute numbers.

In some other embodiments, the relative number or the absolute number of the first channel may be a customized channel number. For example, a bandwidth supported by the NR may be divided into a plurality of customized channels, and each channel may be numbered. Alternatively, the bandwidth supported by the terminal device may be divided into a plurality of customized channels, and each channel may be numbered. In an example, the bandwidth may be equally divided into a plurality of channels according to a specific granularity, or the bandwidth may be divided into a plurality of channels according to a specific rule (for example, in a nonuniform spacing manner).

In an example in which the terminal device supports a bandwidth of 35 MHz near 900 MHz, in an implementation, the band may be divided into 194 channels according to a uniform spacing of 180 kHz, and each channel is numbered. In this case, ceil[log2 (194)] = 8 bits may be required to indicate the frequency domain location of the first channel. In another implementation, the band may be divided into 97 channels according to a uniform spacing of 360 kHz. In this case, ceil[log2(97)]=7 bits may be required to indicate the frequency domain location of the first channel.

The wireless communication method provided in embodiments of this application may be applicable to a terminal device with a relatively large frequency offset error, for example, a zero-power device. The frequency domain location of the first channel is indicated, so that the terminal device may determine real frequency information about a detected synchronization channel or discovery channel. Further, the terminal device may determine a frequency error of the terminal device based on the foregoing real frequency information and a receiving frequency point set for the terminal device, so as to implement frequency calibration and synchronization.

It should be noted that this embodiment of this application is described by using a synchronization channel as an example. A channel division manner, a channel numbering manner, and a channel number indication manner in the foregoing embodiments are also applicable to a discovery channel or another channel.

It should be noted that, for ease of understanding in embodiments of this application, frequency values are provided by way of examples, and do not represent a center frequency point, a synchronization channel spacing, a frequency offset value, and the like of the terminal device in actual operation.

The foregoing describes the method embodiments of this application in detail with reference to FIG. 1 to FIG. 15. The following describes the apparatus embodiments of this application in detail with reference to FIG. 16 to FIG. 18. It should be understood that the description of the method embodiment corresponds to the description of the apparatus embodiment. Therefore, for a part that is not described in detail, reference may be made to the foregoing method embodiment.

FIG. 16 is a schematic diagram of a terminal device according to an embodiment of this application. The terminal device 1600 shown in FIG. 16 includes a receiving unit 1610.

The receiving unit 1610 is configured to receive first information, where the first information is used to indicate a frequency domain location of a first channel, where the first channel is a synchronization channel or a discovery channel.

Optionally, the first information includes one or more of the following information: a frequency value of the first channel; or a channel number of the first channel.

Optionally, the frequency value of the first channel is an absolute frequency value of the first channel.

Optionally, the channel number of the first channel is a relative channel number of the first channel.

Optionally, the relative channel number is associated with one or more of the following information: a center carrier frequency of the first channel; a bandwidth supported by the terminal device; a subcarrier spacing supported by the terminal device; a channel spacing of synchronization channels or discovery channels; or a frequency offset of the terminal device.

Optionally, the first channel belongs to a first channel group, and the relative channel number of the first channel is a channel number of the first channel numbered inner the first channel group.

Optionally, a quantity of channels included in the first channel group is greater than or equal to a quantity of channels included in a frequency error range of the terminal device.

Optionally, the first channel belongs to a first frequency band, and the relative channel number of the first channel is a channel number of the first channel numbered inner the first frequency band.

Optionally, the channel number of the first channel is an absolute channel number of the first channel.

Optionally, the absolute channel number corresponds to an absolute frequency of the first channel.

Optionally, the first information is carried on the first channel; or the first information is carried on a second channel different from the first channel.

Optionally, the first information is carried in one of the following: a synchronization signal and broadcast channel block; a beacon frame; a wake-up receiver synchronization frame; or a discovery frame.

Optionally, the first information is carried in an information field; or the first information is carried in a sequence of a reference signal.

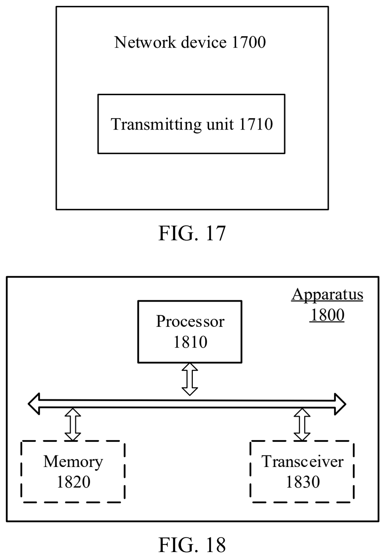

FIG. 17 is a schematic diagram of a network device according to an embodiment of this application. The network device 1700 shown in FIG. 17 includes a transmitting unit 1710.

The transmitting unit 1710 is configured to transmit first information, where the first information is used to indicate a frequency domain location of a first channel, where the first channel is a synchronization channel or a discovery channel.

Optionally, the first information includes one or more of the following information: a frequency value of the first channel; or a channel number of the first channel.

Optionally, the frequency value of the first channel is an absolute frequency value of the first channel.

Optionally, the channel number of the first channel is a relative channel number of the first channel.

Optionally, the relative channel number is associated with one or more of the following information: a center carrier frequency of the first channel; a bandwidth supported by the terminal device; a subcarrier spacing supported by the terminal device; a channel spacing of synchronization channels or discovery channels; or a frequency offset of the terminal device.

Optionally, the first channel belongs to a first channel group, and the relative channel number of the first channel is a channel number of the first channel numbered inner the first channel group.

Optionally, a quantity of channels included in the first channel group is greater than or equal to a quantity of channels included in a frequency error range of the terminal device.

Optionally, the first channel belongs to a first frequency band, and the relative channel number of the first channel is a channel number of the first channel numbered inner the first frequency band.

Optionally, the channel number of the first channel is an absolute channel number of the first channel.

Optionally, the absolute channel number corresponds to an absolute frequency of the first channel.

Optionally, the first information is carried on the first channel; or the first information is carried on a second channel different from the first channel.

Optionally, the first information is carried in one of the following: a synchronization signal and broadcast channel block; a beacon frame; a wake-up receiver synchronization frame; or a discovery frame.

Optionally, the first information is carried in an information field; or the first information is carried in a sequence of a reference signal.

FIG. 18 is a schematic structural diagram of a communications apparatus according to an embodiment of this application. Dashed lines in FIG. 18 indicate that a unit or module is optional. The apparatus 1800 may be configured to implement the method described in the foregoing method embodiments. The apparatus 1800 may be a chip, a terminal device, or a network device.

The apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program that may be executed by the processor 1810 to cause the processor 1810 to perform the methods described in the foregoing method embodiments. The memory 1820 may be separate from the processor 1810 or may be integrated into the processor 1810.

The apparatus 1800 may further include a transceiver 1830. The processor 1810 may communicate with another device or chip through the transceiver 1830. For example, the processor 1810 may transmit data to and receive data from another device or chip through the transceiver 1830.

An embodiment of this application further provides a computer-readable storage medium for storing a program. The computer-readable storage medium may be applied to the terminal device or the network device provided in embodiments of this application, and the program causes a computer to execute a method executed by the terminal device or the network device in embodiments of this application.

An embodiment of this application further provides a computer program product. The computer program product includes a program. The computer program product may be applied to the terminal device or the network device provided in the embodiments of this application, and the program causes a computer to execute the methods performed by the terminal device or the network device in various embodiments of this application.

An embodiment of this application further provides a computer program. The computer program may be applied to the terminal device or the network device provided in the embodiments of this application, and the computer program causes a computer to execute the methods performed by the terminal device or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In the embodiments of this application, the "include" may refer to direct inclusion, or may refer to indirect inclusion. Optionally, the term "include" mentioned in the embodiments of this application may be replaced with "indicate" or "be used to". For example, A including B may be replaced with that A indicates B, or A is used to determine B.

In embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, first information, wherein the first information is used to indicate a frequency domain location of a first channel,
wherein the first channel is a synchronization channel or a discovery channel.

2. The method according to claim 1, wherein the first information comprises one or more of following information:
a frequency value of the first channel; or
a channel number of the first channel.

3. The method according to claim 2, wherein the frequency value of the first channel is an absolute frequency value of the first channel.

4. The method according to claim 2, wherein the channel number of the first channel is a relative channel number of the first channel.

5. The method according to claim 4, wherein the relative channel number is associated with one or more of following information:
a center carrier frequency of the first channel;
a bandwidth supported by the terminal device;
a frequency band supported by the terminal device;
a subcarrier spacing supported by the terminal device;
a channel spacing of synchronization channels or discovery channels; or
a frequency offset of the terminal device.

6. The method according to claim 4 or 5, wherein the first channel belongs to a first channel group, and the relative channel number of the first channel is a channel number of the first channel numbered inner the first channel group.

7. The method according to claim 6, wherein a quantity of channels comprised in the first channel group is greater than or equal to a quantity of channels comprised in a frequency error range of the terminal device.

8. The method according to claim 4 or 5, wherein the first channel belongs to a first frequency band, and the relative channel number of the first channel is a channel number of the first channel numbered inner the first frequency band.

9. The method according to claim 2, wherein the channel number of the first channel is an absolute channel number of the first channel.

10. The method according to claim 9, wherein the absolute channel number corresponds to an absolute frequency of the first channel.

11. The method according to any one of claims 1 to 10, wherein the first information is carried on the first channel; or the first information is carried on a second channel different from the first channel.

12. The method according to claim 11, wherein the first information is carried in one of following:
a synchronization signal and broadcast channel block;
a beacon frame;
a wake-up receiver synchronization frame; or
a discovery frame.

13. The method according to any one of claims 1 to 12, wherein the first information is carried in an information field; or the first information is carried in a sequence of a reference signal.

14. A wireless communication method, comprising:
transmitting, by a network device, first information, wherein the first information is used to indicate a frequency domain location of a first channel,
wherein the first channel is a synchronization channel or a discovery channel.

15. The method according to claim 14, wherein the first information comprises one or more of following information:
a frequency value of the first channel; or
a channel number of the first channel.

16. The method according to claim 15, wherein the frequency value of the first channel is an absolute frequency value of the first channel.

17. The method according to claim 15, wherein the channel number of the first channel is a relative channel number of the first channel.

18. The method according to claim 17, wherein the relative channel number is associated with one or more of following information:
a center carrier frequency of the first channel;
a bandwidth supported by a terminal device;
a frequency band supported by the terminal device;
a subcarrier spacing supported by the terminal device;
a channel spacing of synchronization channels or discovery channels; or
a frequency offset of the terminal device.

19. The method according to claim 17 or 18, wherein the first channel belongs to a first channel group, and the relative channel number of the first channel is a channel number of the first channel numbered inner the first channel group.

20. The method according to claim 19, wherein a quantity of channels comprised in the first channel group is greater than or equal to a quantity of channels comprised in a frequency error range of a terminal device.

21. The method according to claim 17 or 18, wherein the first channel belongs to a first frequency band, and the relative channel number of the first channel is a channel number of the first channel numbered inner the first frequency band.

22. The method according to claim 15, wherein the channel number of the first channel is an absolute channel number of the first channel.

23. The method according to claim 22, wherein the absolute channel number corresponds to an absolute frequency of the first channel.

24. The method according to any one of claims 14 to 23, wherein the first information is carried on the first channel; or the first information is carried on a second channel different from the first channel.

25. The method according to claim 24, wherein the first information is carried in one of following:
a synchronization signal and broadcast channel block;
a beacon frame;
a wake-up receiver synchronization frame; or
a discovery frame.

26. The method according to any one of claims 14 to 25, wherein the first information is carried in an information field; or the first information is carried in a sequence of a reference signal.

27. A terminal device, comprising:
a receiving unit, configured to receive first information, wherein the first information is used to indicate a frequency domain location of a first channel,
wherein the first channel is a synchronization channel or a discovery channel.

28. The terminal device according to claim 27, wherein the first information comprises one or more of following information:
a frequency value of the first channel; or
a channel number of the first channel.

29. The terminal device according to claim 28, wherein the frequency value of the first channel is an absolute frequency value of the first channel.

30. The terminal device according to claim 28, wherein the channel number of the first channel is a relative channel number of the first channel.

31. The terminal device according to claim 30, wherein the relative channel number is associated with one or more of following information:
a center carrier frequency of the first channel;
a bandwidth supported by the terminal device;
a frequency band supported by the terminal device;
a subcarrier spacing supported by the terminal device;
a channel spacing of synchronization channels or discovery channels; or
a frequency offset of the terminal device.

32. The terminal device according to claim 30 or 31, wherein the first channel belongs to a first channel group, and the relative channel number of the first channel is a channel number of the first channel numbered inner the first channel group.

33. The terminal device according to claim 32, wherein a quantity of channels comprised in the first channel group is greater than or equal to a quantity of channels comprised in a frequency error range of the terminal device.

34. The terminal device according to claim 30 or 31, wherein the first channel belongs to a first frequency band, and the relative channel number of the first channel is a channel number of the first channel numbered inner the first frequency band.

35. The terminal device according to claim 28, wherein the channel number of the first channel is an absolute channel number of the first channel.

36. The terminal device according to claim 35, wherein the absolute channel number corresponds to an absolute frequency of the first channel.

37. The terminal device according to any one of claims 27 to 36, wherein the first information is carried on the first channel; or the first information is carried on a second channel different from the first channel.

38. The terminal device according to claim 37, wherein the first information is carried in one of following:
a synchronization signal and broadcast channel block;
a beacon frame;
a wake-up receiver synchronization frame; or
a discovery frame.

39. The terminal device according to any one of claims 27 to 38, wherein the first information is carried in an information field; or the first information is carried in a sequence of a reference signal.

40. A network device, comprising:
a transmitting unit, configured to transmit first information, wherein the first information is used to indicate a frequency domain location of a first channel,
wherein the first channel is a synchronization channel or a discovery channel.

41. The network device according to claim 40, wherein the first information comprises one or more of following information:
a frequency value of the first channel; or
a channel number of the first channel.

42. The network device according to claim 41, wherein the frequency value of the first channel is an absolute frequency value of the first channel.

43. The network device according to claim 41, wherein the channel number of the first channel is a relative channel number of the first channel.

44. The network device according to claim 43, wherein the relative channel number is associated with one or more of following information:
a center carrier frequency of the first channel;
a bandwidth supported by a terminal device;
a frequency band supported by the terminal device;
a subcarrier spacing supported by the terminal device;
a channel spacing of synchronization channels or discovery channels; or
a frequency offset of the terminal device.

45. The network device according to claim 43 or 44, wherein the first channel belongs to a first channel group, and the relative channel number of the first channel is a channel number of the first channel numbered inner the first channel group.

46. The network device according to claim 45, wherein a quantity of channels comprised in the first channel group is greater than or equal to a quantity of channels comprised in a frequency error range of the network device.

47. The network device according to claim 43 or 44, wherein the first channel belongs to a first frequency band, and the relative channel number of the first channel is a channel number of the first channel numbered inner the first frequency band.

48. The network device according to claim 41, wherein the channel number of the first channel is an absolute channel number of the first channel.

49. The network device according to claim 48, wherein the absolute channel number corresponds to an absolute frequency of the first channel.

50. The network device according to any one of claims 40 to 49, wherein the first information is carried on the first channel; or the first information is carried on a second channel different from the first channel.

51. The network device according to claim 50, wherein the first information is carried in one of following:
a synchronization signal and broadcast channel block;
a beacon frame;
a wake-up receiver synchronization frame; or
a discovery frame.

52. The network device according to any one of claims 40 to 51, wherein the first information is carried in an information field; or the first information is carried in a sequence of a reference signal.

53. A terminal device, comprising a memory and a processor, wherein the memory is configured to store a program, and the processor is configured to invoke the program in the memory to execute the method according to any one of claims 1 to 13.

54. A network device, comprising a memory and a processor, wherein the memory is configured to store a program, and the processor is configured to invoke the program in the memory to execute the method according to any one of claims 14 to 26.

55. A terminal device, comprising a processor, configured to invoke a program from a memory to execute the method according to any one of claims 1 to 13.

56. A network device, comprising a processor, configured to invoke a program from a memory to execute the method according to any one of claims 14 to 26.

57. A chip, comprising a processor, configured to invoke a program from a memory to cause a device installed with the chip to execute the method according to any one of claims 1 to 13.

58. A chip, comprising a processor, configured to invoke a program from a memory to cause a device installed with the chip to execute the method according to any one of claims 14 to 26.

59. A computer-readable storage medium, wherein the computer-readable storage medium stores a program, and the program causes a computer to execute the method according to any one of claims 1 to 13.

60. A computer-readable storage medium, wherein the computer-readable storage medium stores a program, and the program causes a computer to execute the method according to any one of claims 14 to 26.

61. A computer program product, comprising a program, wherein the program causes a computer to execute the method according to any one of claims 1 to 13.

62. A computer program product, comprising a program, wherein the program causes a computer to execute the method according to any one of claims 14 to 26.

63. A computer program, wherein the computer program causes a computer to execute the method according to any one of claims 1 to 13.

64. A computer program, wherein the computer program causes a computer to execute the method according to any one of claims 14 to 26.
